# FASCICULE DE BREVET EUROPEEN

(11) **EP 2 353 475 B1**
(45) Date de publication et mention de la délivrance du brevet: **01.05.2013**
(21) Numéro de dépôt: 11152149.8
(22) Date de dépôt: 25.01.2011
(51) Int. Cl.: A47J 37/06

(54) **Appareil de cuisson électrique à plaque de cuisson amovible**
Elektrisches Kochgerät mit entfernbarer Kochplatte
Electrical cooking appliance with removable hot plate

(30) Priorité: 01.02.2010 FR 1050693
(43) Date de publication de la demande: 10.08.2011
(73) Titulaire: SEB SA, 69130 Ecully (FR)
(72) Inventeur: Robin, Jean-Philippe, 74570 Groisy (FR); Gouthière, Christophe, 74150 Rumilly (FR)
(74) Mandataire: Novagraaf Technologies

(56) Documents cités:
- US-A- 3 632 982
- US-A1- 2002 153 366
- US-A1- 2008 116 193

## Description

La présente invention concerne un appareil électrique de cuisson à plaque de cuisson, tel qu'un grille-viande à simple plaque du type barbecue électrique, ou à double plaque du type gaufrier.

On connaît un appareil de cuisson électrique du type comprenant une base, une plaque de cuisson séparable de la base, une résistance électrique de chauffe solidaire de la plaque de cuisson, et des connecteurs électriques portés par la base et adaptés à être connectés à la résistance électrique de chauffe.

Un tel appareil est par exemple décrit dans le brevet US 6 555 795. Ce document divulgue plus particulièrement un gaufrier dont les plaques de cuisson double face (avec résistance électrique emprisonnée entre les deux faces) sont séparables d'une charnière portant des connecteurs électriques, la séparation se faisant par une traction réalisée par un utilisateur.

L'inconvénient de cet appareil est la façon de réaliser la séparation de la plaque de cuisson de la base qui est assez peu pratique. De plus, ce déplacement par la force est d'autant plus difficile que la plaque de cuisson est encombrante et lourde. Il nécessite également la mise en place de zones de préhensions sur la plaque de cuisson permettant à l'utilisateur d'avoir une prise en main suffisante pour réaliser l'extraction. Enfin, il se peut également que les différents éléments permettant la connexion électrique de la plaque de cuisson à la base soient déformés lors d'une traction qui ne serait pas réalisée selon l'axe de ces éléments jusqu'à la déconnexion soit complète de la plaque.

Selon l'invention, dans l'appareil de cuisson du type précité, la base comprend un organe d'extraction mobile entre une position de repos et une position d'extraction, adapté, quand il est déplacé de sa position de repos à sa position d'extraction à entraîner la déconnexion de la résistance électrique et la libération de la plaque de cuisson de la base.

La présence de l'organe d'extraction permet, d'une part, selon la configuration de cet organe, de démultiplier l'effort fournit par l'utilisateur, et, d'autre part, imposer un déplacement de la plaque de cuisson garantissant un mouvement ne risquant pas d'endommager ni les connecteurs électriques, ni les bornes de la résistance électrique.

D'autres particularités de la présente invention apparaîtront dans le mode de réalisation donné à titre d'exemple non limitatif et illustré par les dessins mis en annexe dans lesquels :
La figure 1 est une vue en coupe longitudinale d'un grille-viande dont la plaque de cuisson est en position de cuisson et l'organe d'extraction est en position de repos ;
La figure 2 est une vue similaire à la figure 1, la plaque de cuisson étant en position libérée et l'organe d'extraction en position d'extraction ;

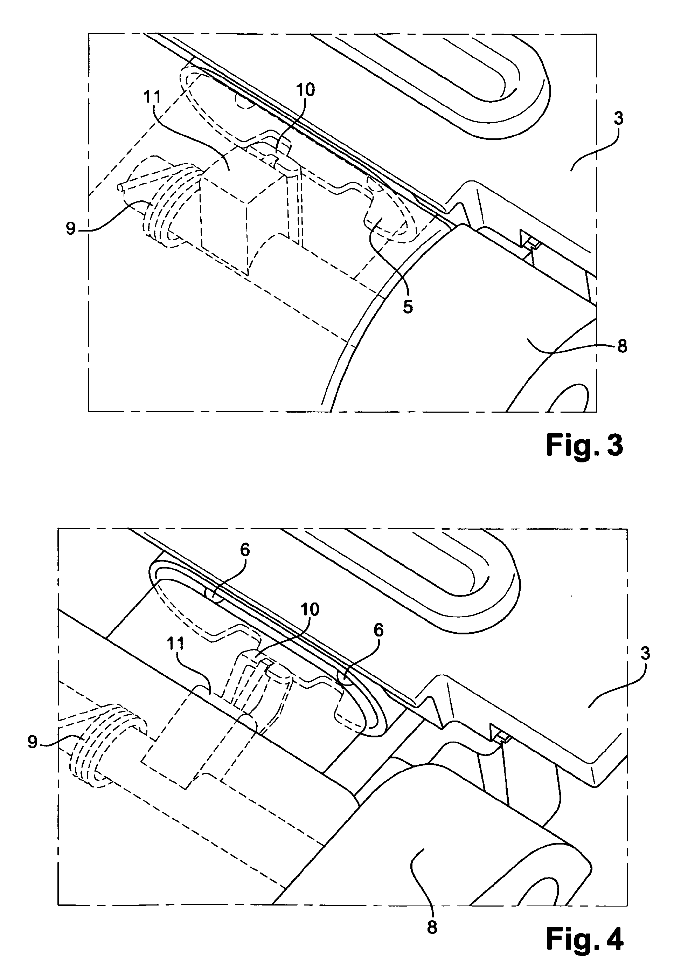

La figure 3 est une vue partielle de dessus du grille-viande illustrant l'organe d'extraction en position de repos ; et
La figure 4 est une vue similaire à la figure 3, l'organe d'extraction étant en position d'extraction.

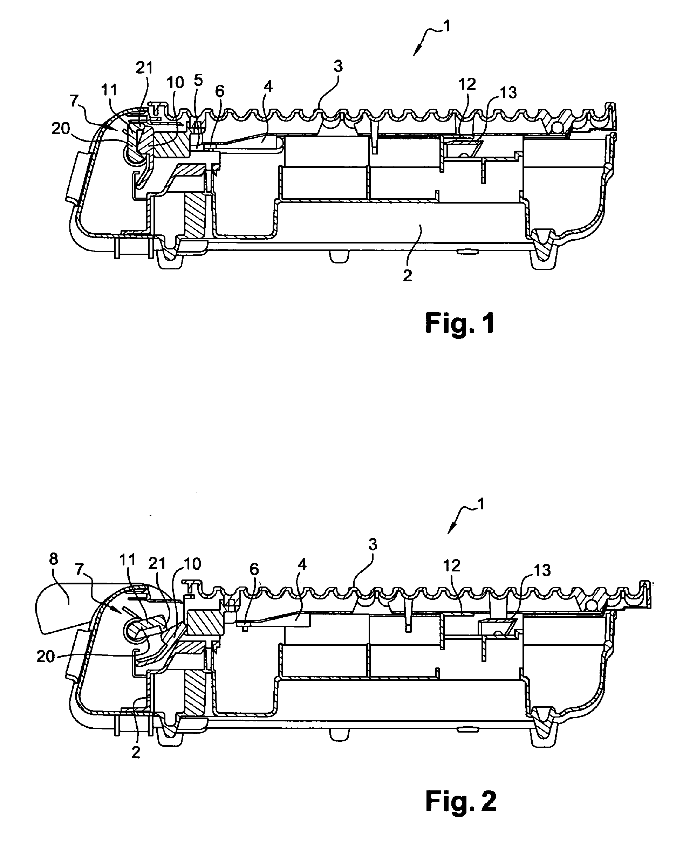

Comme illustré aux figures 1 et 2, un appareil de cuisson électrique 1 (en l'occurrence, un grille-viande) comprend une base 2, une plaque de cuisson 3 et une résistance électrique de chauffe 4.

La résistance électrique de chauffe 4 est solidaire de la plaque de cuisson 3 qui est séparable de la base 2. Une fois séparée de la base 2, il est facile de nettoyer à grandes eaux la plaque de cuisson 4. Afin d'assurer la connexion électrique de la résistance 4, la base 2 porte des connecteurs électriques 5 qui sont adaptés à être connectés à des bornes 6 de la résistance 4.

Pour permettre une déconnexion aisée de la résistance électrique 4, la base 2 comprend un organe d'extraction 7 qui est monté mobile par rapport à la base 2 entre une position de repos et une position d'extraction. Cet organe d'extraction 7 est adapté à entraîner la déconnexion de la résistance électrique 4 et la libération de la plaque de cuisson 3 de la base 2 quand il est déplacé de sa position de repos à sa position d'extraction.

De plus, dans le présent mode de réalisation, la plaque de cuisson 3 est mobile par rapport à la base 2 entre une position de cuisson dans laquelle la résistance électrique 4 est connectée aux connecteurs 5, et une position libérée dans laquelle la résistance électrique 4 y est déconnecté. L'organe d'extraction 7 est également adapté à déplacer la plaque de cuisson 3 de sa position de cuisson à sa position libérée quand il est déplacé de sa position de repos à sa position d'extraction. La déconnexion de la résistance électrique 4 est concomitante au déplacement de la plaque de cuisson 3, les connecteurs 5 étant fixes par rapport à la base 2.

De façon plus détaillée, l'organe d'extraction 7 comprend un élément de préhension 8 qui permet la manipulation de l'organe d'extraction 7 par un utilisateur. Cet élément de préhension 8 est monté mobile entre une position de repos et une position d'extraction qui correspondent, respectivement, aux positions de repos et d'extraction de l'organe d'extraction 7. Ici, l'élément de manipulation 8 est un levier 8 qui est monté en rotation par rapport à la base 2.

Dans le présent exemple, le levier 8 est mobile sur environ un quart de tour autour d'un arbre immobile (par rapport à la base 2) situé à son extrémité supérieure. Le levier 8 est sensiblement vertical (le long de la face avant de l'appareil 1) en position de repos, et sensiblement horizontal (saillant devant la face avant) en position d'extraction.

En outre, l'appareil 1 comprend un ressort 9 sollicitant l'élément de préhension 8 dans sa position de repos.

L'organe d'extraction 7 comprend également un élément d'entraînement 10 qui est adapté à venir en contact contre la plaque de cuisson 3 de façon à la déplacer. Cet élément d'entraînement 10 est monté mobile par rapport à la base 2 entre une position de repos et une position d'extraction qui correspondent, respectivement, aux positions de repos et d'extraction de l'organe d'extraction 7. Ici, l'élément d'entraînement 10 est une patte 10 qui est montée en rotation par rapport à la base 2. L'élément d'entraînement 10 agit comme une came sur la plaque de cuisson 3 afin d'entraîner cette dernière en translation, de sa position de cuisson à sa position libérée, quand il passe de sa position de repos à sa position d'extraction.

Par ailleurs, dans le présent exemple, vu les dimensions des connecteurs électriques 5 et des bornes 6, leur dégagement réciproque nécessite un déplacement important. Cependant, afin de limiter l'encombrement généré par le déplacement des éléments de préhension 8 et d'entraînement 10, ces derniers sont mobiles l'un par rapport à l'autre. L'élément d'entraînement 10 est entraîné de sa position de repos à sa position d'extraction par le déplacement de l'élément de préhension 8 de sa position de repos à sa position d'extraction. Cette configuration permet une démultiplication du déplacement de la plaque de cuisson 3.

L'organe d'extraction 7 comprend en outre un élément de transmission 11 qui est adapté à venir en contact contre l'élément d'entraînement 10 de façon à le déplacer quand l'élément de préhension 8 est déplacé. Cet élément de transmission 11 est monté mobile par rapport à la base 2 entre une position de repos et une position d'extraction qui correspondent, respectivement, aux positions de repos et d'extraction de l'organe d'extraction 7. Ici, l'élément de transmission 11 est un doigt 11 qui est solidaire de l'élément de préhension 8 (et qui est donc monté en rotation par rapport à la base 2) et qui est adapté à venir en contact contre l'élément d'entraînement 10. L'élément de transmission 11 agit comme une came sur l'élément d'entraînement 10 afin d'entraîner la rotation de ce dernier de sa position de cuisson à sa position libérée, quand l'élément de transmission 11 (et donc l'élément de préhension 8) passe de sa position de repos à sa position d'extraction.

Dans le présent exemple, l'élément de transmission 11 est mobile sur environ un quart de tour autour du même arbre de rotation que celui de l'élément de préhension 8. Le doigt 11 est sensiblement vertical en position de repos (l'arbre étant à son extrémité inférieure), et sensiblement horizontal en position d'extraction. L'élément d'entraînement 10 est quant à lui mobile sur environ un huitième de tour autour d'un autre arbre de rotation (immobile par rapport à la base 2). La patte 10 est sensiblement verticale en position de repos (l'arbre étant à son extrémité inférieure), et incliné vers la plaque de cuisson 3 en position d'extraction.

L'interface entre le doigt 11 et la patte 10 permet également d'améliorer l'amplitude de mouvement conféré à la plaque de cuisson et limiter l'effort nécessaire pour permettre le déplacement de cette dernière. Le doigt 11 présente en fait une branche principale 20 dont l'orientation définie celle du doigt 11, et à l'extrémité libre de cette branche principale 20, un ergot 21 qui y est sensiblement perpendiculaire. Complémentairement, la patte 10 possède, à sa face située du côté du doigt 11, un plan 22 légèrement incliné (d'environ 20°) par rapport à la face située du côté de la plaque de cuisson 11 (quand la patte 20 est verticale en position de repos, le plan 22 est incliné de 20° par rapport à la verticale).

Par ailleurs, afin d'empêcher tout déplacement de la plaque de cuisson 3 tendant à la séparer de la base 2 tant que la déconnexion électrique de la résistance électrique n'est pas complètement effectuée, l'appareil 1 comprend un système de sécurité permettant la séparation de la plaque de cuisson 3 de la base 2 uniquement quand la plaque 3 est dans sa position libérée. Ce système de sécurité permet d'éviter tout endommagement des bornes 6 de la résistance électrique 4 et des connecteurs 5 de la base 2.

De façon plus précise, comme illustré aux figures 1 et 2, le système de sécurité comprend des organes de verrouillage 12 portés par la base 2 et des organes complémentaires de verrouillage 13 portés par la plaque de cuisson 3. Les organes de verrouillage 12 et les organes complémentaires de verrouillage 13 (disposés à un niveau inférieur à celui des organes de verrouillage 12) se chevauchent quand la plaque de cuisson 3 est dans sa position de cuisson et tant qu'elle n'a pas atteint sa position libérée. Quand la plaque de cuisson 3 est en position libérée, les organes de verrouillage 12 et les organes complémentaires de verrouillage 13 sont complètement dégagés les uns elle des autres, rendant possible la séparation de la plaque 3.

En utilisation, un utilisateur, en déplaçant l'élément de préhension 8 de sa position de repos à sa position d'extraction, entraîne le déplacement correspondant de l'élément de transmission 11. Ce dernier, en butée contre l'élément d'entraînement 10, génère le déplacement de l'élément d'entraînement 10 de sa position de repos à sa position d'extraction. Le mouvement de l'élément d'entraînement 10, en butée contre la plaque de cuisson 3, entraîne le déplacement de cette dernière de sa position de cuisson à sa position libérée dans laquelle la position relative des organes de verrouillage 12 et des organes complémentaires de verrouillage 13 permet sa séparation de la base 2. Ainsi, lors de la rotation d'un quart de tour de l'élément de préhension 8, le doigt 11 effectue également un quart de tour et l'extrémité libre de ce dernier se déplace horizontalement sur 15 mm. La démultiplication réalisée par la présence de la patte 10 (qui, ici, est d'une longueur d'environ 38 mm et dont l'axe de rotation est décalée de celui du doigt 11) permet de déplacer la plaque de cuisson de 23,5 mm (et donc de la dégager de contacteurs ayant cette longueur).

## Revendications

1. Appareil de cuisson électrique (1) comprenant une base (2), une plaque de cuisson (3) séparable de la base (2), une résistance électrique de chauffe (4) solidaire de la plaque de cuisson (3), et des connecteurs électriques (5) portés par la base (2) et adaptés à être connectés à la résistance électrique de chauffe (4), la base (2) portant un organe d'extraction (7) mobile entre une position de repos et une position d'extraction, et adapté, quand il est déplacé de sa position de repos à sa position d'extraction, à entraîner la déconnexion de la résistance électrique (4) des connecteurs (5) et la libération de la plaque de cuisson (3) de la base (2), **caractérisé en ce que** la plaque de cuisson (3) est mobile d'une position de cuisson dans laquelle la résistance électrique (4) est connectée aux connecteurs (5), à une position libérée dans laquelle la résistance électrique (4) en est déconnectée, et l'organe d'extraction (7) est adapté à déplacer la plaque de cuisson (3) de sa position de cuisson à sa position libérée quand il est déplacé de sa position de repos à sa position d'extraction.

2. Appareil (1) selon la revendication 1, **caractérisé en ce que** l'organe d'extraction (7) comprend un élément de préhension (8) adapté à permettre la manipulation de l'organe d'extraction (7) par un utilisateur, et monté mobile entre une position de repos et une position d'extraction correspondant respectivement aux positions de repos et d'extraction de l'organe d'extraction (7).

3. Appareil (1) selon la revendication 2, **caractérisé en ce que** l'élément de préhension (8) est un levier (8) monté en rotation par rapport à la base (2).

4. Appareil (1) selon l'une des revendications 1 à 3, **caractérisé en ce que** l'organe d'extraction (7) comprend un élément d'entraînement (10) monté mobile par rapport à la base (2) entre une position de repos et une position d'extraction correspondant respectivement aux positions de repos et d'extraction de l'organe d'extraction (7), et adapté à venir en contact contre la plaque de cuisson (3) de façon à l'entraîner en translation de sa position de cuisson à sa position libérée quand il passe de sa position de repos à sa position d'extraction.

5. Appareil (1) selon la revendication 4, **caractérisé en ce que** l'élément d'entraînement (10) est une patte (10) montée en rotation par rapport à la base (2).

6. Appareil (1) selon l'une des revendications 4 ou 5 dépendantes de l'une des revendications 3 ou 4, **caractérisé en ce que** l'élément d'entraînement (10) est mobile par rapport à l'élément de préhension (8), et est entraîné de sa position de repos à sa position d'extraction par le déplacement de l'élément de préhension (8) de sa position de repos à sa position d'extraction.

7. Appareil (1) selon la revendication 6, **caractérisé en ce que** l'organe d'extraction (7) comprend un élément de transmission (11) monté mobile par rapport à la base (2) et adapté à venir en contact contre l'élément d'entraînement (10) de façon à entraîner le déplacement de ce dernier de sa position de repos à sa position d'extraction quand l'élément de préhension (8) passe de sa position de repos à sa position d'extraction.

8. Appareil (1) selon la revendication 7, **caractérisé en ce que** l' élément de transmission (11) est un doigt (11) solidaire de l'élément de préhension (8) et adapté à venir en contact contre l'élément d'entraînement (10) de façon à entraîner ce dernier en rotation.

9. Appareil (1) selon l'une des revendications 1 à 8, **caractérisé en ce qu'**il comprend un système de sécurité permettant la séparation de la plaque de cuisson (3) de la base (2) uniquement quand la plaque (3) est dans sa position libérée.

10. Appareil (1) selon la revendication 9, **caractérisé en ce que** le système de sécurité comprend des organes de verrouillage (12) portés par la base (2) et des organes complémentaires de verrouillage (13) portés par la plaque de cuisson (3), les organes de verrouillage (12) et les organes complémentaires de verrouillage (13) se chevauchant tant que la plaque de cuisson (3) n'est pas dans sa position libérée.

## Claims

1. Electrical cooking apparatus (1) comprising a base (2), a hotplate (3) which can be separated from the base (2), an electric heating resistor (4) attached to the hotplate (3), and electrical connectors (5) borne by the base (2) and suitable for connection to the electric heating resistor (4), the base (2) bearing an extraction member (7) that can move between a rest position and an extraction position, and suitable, when it is displaced from its rest position to its extraction position, for disconnecting the electric resistor (4) from the connectors (5) and releasing the hotplate (3) from the base (2), **characterized in that** the hotplate (3) can move from a cooking position in which the electric resistor (4) is connected to the connectors (5), to a released position in which the electric resistor (4) is disconnected therefrom, and the extraction member (7) is suitable for displacing the hotplate (3) from its cooking position to its released position when it is displaced from its rest position to its extraction position.

2. Apparatus (1) according to Claim 1, **characterized in that** the extraction member (7) comprises a gripping element (8) suitable for allowing the extraction member (7) to be handled by a user, and mounted to move between a rest position and an extraction position corresponding respectively to the rest and extraction positions of the extraction member (7).

3. Apparatus (1) according to Claim 2, **characterized in that** the gripping element (8) is a lever (8) mounted to rotate relative to the base (2).

4. Apparatus (1) according to one of Claims 1 to 3, **characterized in that** the extraction member (7) comprises a driving element (10) mounted to move relative to the base (2) between a rest position and an extraction position corresponding respectively to the rest and extraction positions of the extraction member (7), and suitable for coming into contact against the hotplate (3) so as to drive it in translation from its cooking position to its released position when it passes from its rest position to its extraction position.

5. Apparatus (1) according to Claim 4, **characterized in that** the driving element (10) is a tab (10) mounted to rotate relative to the base (2).

6. Apparatus (1) according to one of Claims 4 and 5, dependent on one of Claims 3 and 4, **characterized in that** the driving element (10) can move relative to the gripping element (8), and is driven from its rest position to its extraction position by the displacement of the gripping element (8) from its rest position to its extraction position.

7. Apparatus (1) according to Claim 6, **characterized in that** the extraction member (7) comprises a transmission element (11) mounted to move relative to the base (2) and suitable for coming into contact against the driving element (10) so as to cause the displacement thereof from its rest position to its extraction position when the gripping element (8) passes from its rest position to its extraction position.

8. Apparatus (1) according to Claim 7, **characterized in that** the transmission element (11) is a finger (11) attached to the gripping element (8) and suitable for coming into contact against the driving element (10) so as to drive the latter in rotation.

9. Apparatus (1) according to one of Claims 1 to 8, **characterized in that** it comprises a safety system allowing the hotplate (3) to be separated from the base (2) only when the plate (3) is in its released position.

10. Apparatus (1) according to Claim 9, **characterized in that** the safety system comprises locking members (12) borne by the base (2) and complementary locking members (13) borne by the hotplate (3), the locking members (12) and the complementary locking members (13) overlapping one another as long as the hotplate (3) is not in its released position.

## Patentansprüche

1. Elektrisches Gargerät (1), das einen Unterbau (2), eine vom Unterbau (2) trennbare Garplatte (3), einen fest mit der Garplatte (3) verbundenen elektrischen Heizwiderstand (4) und elektrische Verbinder (5) enthält, die vom Unterbau (2) getragen werden und mit dem elektrischen Heizwiderstand (4) verbunden werden können, wobei der Unterbau (2) ein Entnahmeorgan (7) trägt, das zwischen einer Ruhestellung und einer Entnahmestellung beweglich und geeignet ist, wenn es von seiner Ruhestellung in seine Entnahmestellung verschoben wird, das Trennen des elektrischen Widerstands (4) von den Verbindern (5) und das Lösen der Garplatte (3) vom Unterbau (2) zu bewirken, **dadurch gekennzeichnet, dass** die Garplatte (3) von einer Garstellung, in der der elektrische Widerstand (4) mit den Verbindern (5) verbunden ist, in eine gelöste Stellung beweglich ist, in der der elektrische Widerstand (4) davon getrennt ist, und das Entnahmeorgan (7) geeignet ist, um die Garplatte (3) von ihrer Garstellung in ihre gelöste Stellung zu verschieben, wenn es von seiner Ruhestellung in seine Entnahmestellung verschoben wird.

2. Gerät (1) nach Anspruch 1, **dadurch gekennzeichnet, dass** das Entnahmeorgan (7) ein Greifelement (8) enthält, das geeignet ist, um die Handhabung des Entnahmeorgans (7) durch einen Benutzer zu erlauben, und das zwischen einer Ruhestellung und einer Entnahmestellung beweglich ist, die den Ruhe- bzw. Entnahmestellungen des Entnahmeorgans (7) entsprechen.

3. Gerät (1) nach Anspruch 2, **dadurch gekennzeichnet, dass** das Greifelement (8) ein Hebel (8) ist, der bezüglich des Unterbaus (2) drehbar montiert ist.

4. Gerät (1) nach einem der Ansprüche 1 bis 3, **dadurch gekennzeichnet, dass** das Entnahmeorgan (7) ein Antriebselement (10) enthält, das bezüglich des Unterbaus (2) zwischen einer Ruhestellung und einer Entnahmestellung beweglich montiert ist, die den Ruhe- bzw. Entnahmestellungen des Entnahmeorgans (7) entsprechen, und geeignet ist, um gegen die Garplatte (3) in Kontakt zu kommen, um sie in Translationsrichtung von ihrer Garstellung in ihre gelöste Stellung anzutreiben, wenn es von seiner Ruhestellung in seine Entnahmestellung übergeht.

5. Gerät (1) nach Anspruch 4, **dadurch gekennzeichnet, dass** das Antriebselement (10) eine Lasche (10) ist, die bezüglich des Unterbaus (2) drehbar montiert ist.

6. Gerät (1) nach einem der Ansprüche 4 oder 5 abhängig von einem der Ansprüche 3 oder 4, **dadurch gekennzeichnet, dass** das Antriebselement (10) bezüglich des Greifelements (8) beweglich ist und durch die Verschiebung des Greifelements (8) von seiner Ruhestellung in seine Entnahmestellung von seiner Ruhestellung in seine Entnahmestellung angetrieben wird.

7. Gerät (1) nach Anspruch 6, **dadurch gekennzeichnet, dass** das Entnahmeorgan (7) ein Übertragungselement (11) enthält, das bezüglich des Unterbaus (2) beweglich montiert ist und gegen das Antriebselement (10) in Kontakt kommen kann, um dessen Verschiebung von seiner Ruhestellung in seine Entnahmestellung zu verursachen, wenn das Greifelement (8) von seiner Ruhestellung in seine Entnahmestellung übergeht.

8. Gerät (1) nach Anspruch 7, **dadurch gekennzeichnet, dass** das Übertragungselement (11) ein Finger (11) ist, der fest mit dem Greifelement (8) verbunden und geeignet ist, um gegen das Antriebselement (10) in Kontakt zu kommen, um letzteres in Drehung zu versetzen.

9. Gerät (1) nach einem der Ansprüche 1 bis 8, **dadurch gekennzeichnet, dass** es ein Sicherheitssystem enthält, das die Trennung der Garplatte (3) vom Unterbau (2) nur dann erlaubt, wenn die Platte (3) in ihrer gelösten Stellung ist.

10. Gerät (1) nach Anspruch 9, **dadurch gekennzeichnet, dass** das Sicherheitssystem vom Unterbau (2) getragene Verriegelungsorgane (12) und von der Garplatte (3) getragene komplementäre Verriegelungsorgane (13) enthält, wobei die Verriegelungsorgane (12) und die komplementären Verriegelungsorgane (13) einander überlappen, so lange die Garplatte (3) nicht in ihrer gelösten Stellung ist.
